# EUROPÄISCHE PATENTSCHRIFT

(11) **EP 1 364 184 B1**
(45) Veröffentlichungstag und Bekanntmachung des Hinweises auf die Patenterteilung: **05.10.2011**
(21) Anmeldenummer: 01985792.9
(22) Anmeldetag: 21.12.2001
(51) Int. Cl.: G01C 19/56, G01P 9/04

(54) **DREHRATENSENSOR**
ROTATIONAL SPEED SENSOR
CAPTEUR DE VITESSE DE ROTATION

(30) Priorität: 21.02.2001 DE 10108198
(43) Veröffentlichungstag der Anmeldung: 26.11.2003
(73) Patentinhaber: ROBERT BOSCH GMBH, 70442 Stuttgart (DE)
(72) Erfinder: WILLIG, Rainer, 71732 Tamm (DE); THOMAE, Andreas, 29625 Anderson (US); KUHLMANN, Burkhard, 72800 Eningen (DE); HAUER, Joerg, 72762 Reutlingen (DE); GOMEZ, Udo-Martin, 71229 Leonberg (DE); GOETZ, Siegbert, 70839 Gerlingen (DE); DOERING, Christian, 70563 Stuttgart (DE); FEHRENBACH, Michael, 72766 Mittelstadt (DE); BAUER, Wolfram, 72074 Tuebingen (DE); BISCHOF, Udo, 72827 Wannweil (DE); NEUL, Reinhard, 70567 Stuttgart (DE); FUNK, Karsten, Palo Alto, CA 9430 (US); LUTZ, Markus, Palo Alto, CA 9430 (US); WUCHER, Gerhard, 72762 Reutlingen (DE); FRANZ, Jochen, 72762 Reutlingen (DE)
(86) Internationale Anmeldenummer: PCT/DE2001/004858
(87) Internationale Veröffentlichungsnummer: WO 2002/066927

(56) Entgegenhaltungen:
- WO-A-98/15799
- DE-A- 10 035 605

## Beschreibung

### Stand der Technik

Die Erfindung geht aus von einem Drehratensensor nach der Gattung des unabhängigen Patentanspruchs.

Aus der US 6067858 sind bereits Drehratensensoren bekannt, bei denen auf der Oberfläche eines Substrats ein Coriolis-Element angeordnet ist. Das Coriolis-Element wird zu Schwingungen in einer ersten Achse angeregt. Die Auslenkungen des Coriolis-Element aufgrund einer Coriolis-Kraft in einer zweiten Achse, die ebenfalls parallel zum Substrat ist, wird nachgewiesen.

### Vorteile der Erfindung

Der erfindungsgemäße Drehratensensor mit den Merkmalen des unabhängigen Patentanspruchs hat demgegenüber den Vorteil, dass sowohl ein Anregungselement wie auch ein Nachweiselement vorgesehen ist. Der Nachweis erfolgt daher an einen Nachweiselement welches sich nur in der Nachweisrichtung bewegt. Die Anregung erfolgt mit einem Element welches sich nur in der Anregungsrichtung bewegte. Die Frequenzen der Schwingungen in den einzelnen Richtungen lassen sich bei einem derartigen System besonders einfach in jeder Richtung auslegen.

Die Druckschrift DE 198 27 688 A1 offenbart einen Drehratensensor mit drei Elementen über eine Oberfläche eines Substrats, wobei ein rahmenförmiges Anregungselement vorgesehen ist, welches in einer X-Richtung angetrieben wird, und sich nur in dieser Richtung bewegen kann. Das Anregungselement ist mit Trägern, die in X-Richtung steif und in Y-Richtung weich sind, mit einem rahmenförmigen Coriolis-Element verbunden, welches sich sowohl in X-Richtung als auch in Y-Richtung gegenüber dem Substrat bewegen kann. Das Coriolis-Element ist mittels Trägern die in X-Richtung weich und in Y-Richtung steif sind mit einem rahmenförmigen Nachweiselement verbunden, welches sich nur in Y-Richtung bewegen kann. Zur Detektion der Auslenkung des Nachweiselementes in Y-Richtung aufgrund einer Coriolis-Kraft in dieser Richtung, sind Detektionsmittel vorgesehen.

Um in Nachweisrichtung auftretende Linearbeschleunigungen zu unterdrücken, ist erfindungsgemäß ein weiteres Coriolis-Element vorgesehen.

Weitere Vorteile und Verbesserungen ergeben sich durch die Maßnahmen der abhängigen Patentansprüche. Die Anregung der Schwingungen des Coriolis-Elements erfolgt besonders einfach durch ein Antriebselement, welches Antriebskräfte durch Federn überträgt. Das Coriolis-Element kann dabei vollständig an diesem Antriebselement aufgehängt werden. Als Anregungsmittel können dabei elektrostatische Kammantriebe am Antriebselement vorgesehen werden. Die Nachweiselemente werden besonders einfach so an dem Substrat aufgehängt, dass nur eine Bewegung in Richtung der Coriolis-Kräfte erfolgt. Störeffekte aufgrund einer Bewegung der beweglichen Elektroden, die nicht in der Nachweisrichtung sind, werden dadurch unterdrückt Um in Nachweisrichtung auftrebende Linearbeschleunigungen zu unterdrücken, isr ein weiteres corioliselement vorgeschen. Um eine gegenphasige Schwingung der beiden Coriolis-Elemente zu gewährleisten, sollte sich die gegenphasige Schwingung frequenzmäßig eindeutig von der gleichphasigen Schwingung unterscheiden. Dazu sind Kopplungsfedern zwischen den beiden Coriolis-Elementen oder zwischen den beiden Nachweiselementen vorgesehen

### Zeichnungen

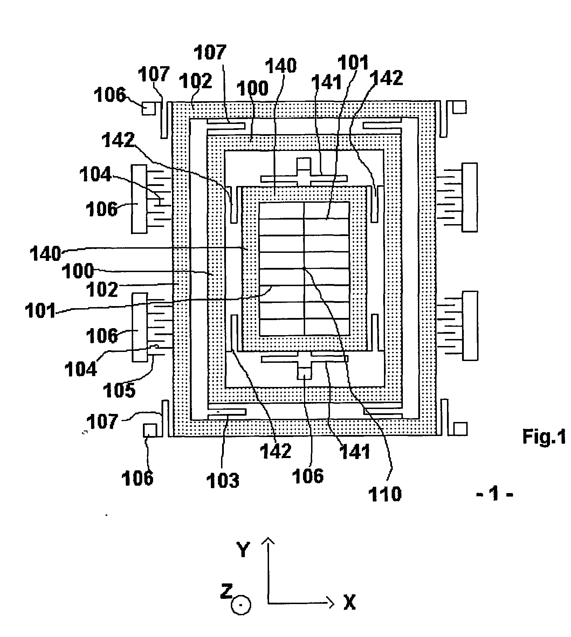

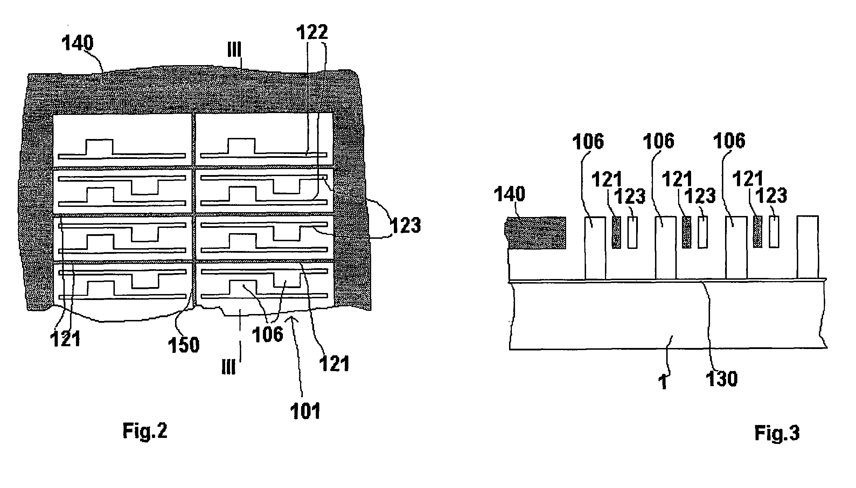

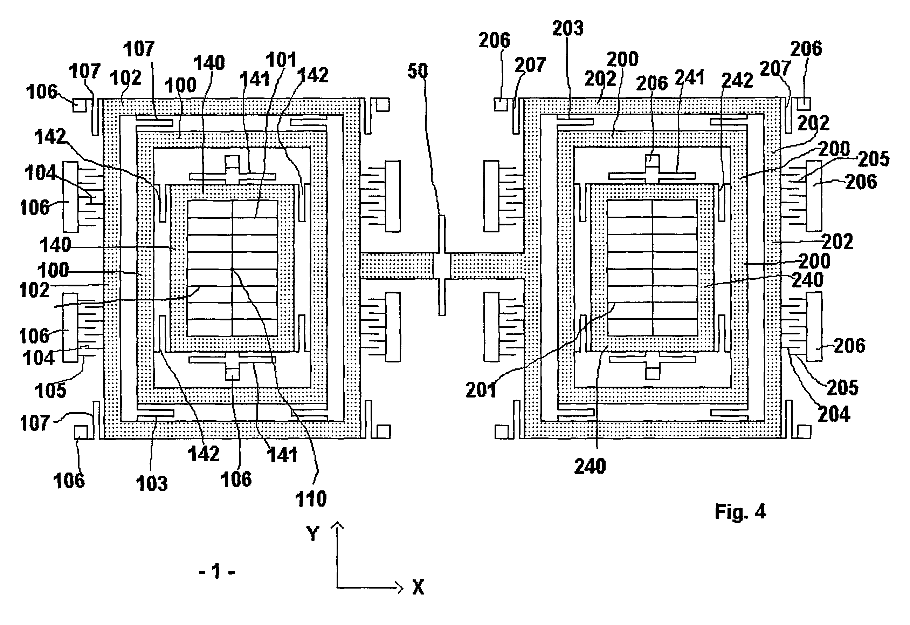

Ausführungsbeispiele der Erfindung werden in den Zeichnungen dargestellt und in der nachfolgenden Beschreibung näher erläutert. Es zeigen Figur 1 eine Aufsicht auf eine Unterstruktur eines erfindungsgemäßen Drehratensensors, Figur 2 eine Detailansicht der Unterstruktur des Drehratensensors nach Figur 1, Figur 3 einen Querschnitt durch die Figur 2 und die Figur 4 ein Ausführungsbeispiel eines erfindungsgemäßen Drehratensensors in einer Aufsicht.

### Beschreibung

In den Figuren 1-3 wird eine Unterstruktur der Erfindung erläutert. In Figur 1 wird dabei eine Aufsicht auf eine Unterstruktur des gesamten Drehratensensors, in der Figur 2 eine Detailansicht der Unterstruktur des Drehratensensors und in der Figur 3 wird eine Seitenansicht eines Querschnitts durch die Figur 2 gezeigt.

In Figur 1 wird eine Aufsicht auf ein in der Figur 1 nicht näher dargestelltes Substrat 1 gezeigt, über dem ein Coriolis-Element 100 angeordnet ist. Das Coriolis-Element 100 ist als rechteckige, rahmenförmige Struktur ausgebildet. Das rahmenförmige Coriolis-Element 100 umgibt ein ebenfalls rahmenförmiges Nachweiselement 140. Das rahmenförmige Coriolis-Element 100 wird von einem ebenfalls rechteckigen, rahmenförmigen Antriebselement 102 umgeben. Die Verbindung zwischen dem Antriebselement 102 und dem Coriolis-Element 100 wird durch Biegefedern 103 hergestellt. Die Biegefedern sind dabei so ausgebildet, dass sie in Y-Richtung weich ausgebildet sind und in X-Richtung steif ausgebildet sind. An dem Antriebselement 102 sind bewegliche Elektroden 104 befestigt, die kammartig in feststehende Elektroden 105 greifen. Die feststehenden Elektroden 105 sind durch Lagerblöcke 106 fest mit dem Substrat 1 verbunden. Weiterhin ist das Antriebselement 102 mittels Federn 107 mit weiteren Lagerblöcken 106 verbunden, die ebenfalls fest mit dem Substrat 1 verbunden sind. Die Federn 107 sind weich in X-Richtung und steif in Y-Richtung.

Für den Nachweis einer Auslenkung des Coriolis-Elements 100 ist ein rahmenförmiges Nachweiselement 140 im Inneren der rahmenförmigen Coriolis-Elements 100 vorgesehen. Das Nachweiselement 140 ist ebenfalls als rechteckige Rahmenstruktur ausgeführt, die mittels Federelementen 141 mit Lagerblöcken 106 mit dem Substrat 1 verbunden ist. Die Federelemente 141 sind weich in Y-Richtung und steif in X-Richtung und erlauben somit im wesentlichen nur, dass der Nachweisrahmen 140 in Y-Richtung auslenkbar ist. Der Nachweisrahmen 140 ist durch Federelemente 142 mit dem Coriolis-Element 100 verbunden. Die Federelemente 142 sind in X-Richtung weich und in Y-Richtung steif ausgelegt und übertragen somit besonders gut die Coriolis-Kräfte in Y-Richtung. Im Inneren der Nachweisrahmen 140 sind gitterförmige Auswertemittel 101 angeordnet, die in der Figur 1 nur angedeutet werden. Eine Detailansicht dieser Elemente entspricht den Figuren 2 und 3.

Der Drehratensensor ist somit nur über die Lagerblöcke 106 mit dem Substrat 1 verbunden. Sowohl das Coriolis-Element 100 wie das Antriebselement 102 und das Nachweiselement 140 können somit relativ zum Substrat 1 bewegt werden. Die Bewegung dieser Elemente wird nur durch die Federelemente 103, 107, 141, 142 bestimmt.

Die Federn 107 sind so ausgelegt, dass sie in X-Richtung weich und in Y-Richtung steif ausgebildet sind. Das Antriebselement 102 kann sich somit im Wesentlichen nur entlang einer Bahn bewegen, die parallel zur X-Richtung ist. Das Coriolis-Element 100 ist über die Federn 103 mit dem Antriebselement 102 verbunden. Das Coriolis-Elemente 100 kann sich somit relativ zum Antriebselementen 102 im Wesentlichen nur in Y-Richtung bewegen. Bei einer Bewegung des Antriebselements 102 in einer Richtung, die parallel zur X-Richtung ist, wird natürlich auch das Coriolis-Element 100 in dieser Richtung bewegt. Relativ zum Substrat 1 ist somit das Coriolis-Elemente 100 sowohl in einer Richtung parallel zur X-Richtung wie auch in Y-Richtung beweglich. Das Nachweiselement 140 ist durch die Federn 141 so mit dem Substrat 1 verbunden, so dass eine Bewegung relativ zum Substrat im Wesentlichen nur in einer Richtung parallel zur Y-Richtung möglich ist. Durch die Federn 142 werden die auf das Coriolis-Element 100 in dieser Richtung wirkenden Kräfte auf das Nachweiselement 140 übertragen. Das Nachweiselement 140 wird somit bei einer Bewegung des Corioliselements 100 parallel zur Y-Richtung entsprechend verschoben.

Für die Beschreibung der Funktion des Sensors ist noch für das Coriolis-Element 100 ein Schwerpunkt 110 angegeben. Der Schwerpunkt liegt jeweils im Mittelpunkt der rahmenförmigen Coriolis-Elementes 100.

Durch Anlegen von elektrischen Spannungen zwischen den beweglichen Elektroden 104 und den feststehenden Elektroden 105 wird das Antriebselement 102 zu Schwingungen angeregt. Entsprechend wird auch das Coriolis-Element 100 zu Schwingungen angeregt. Der Schwerpunkt 110 des Coriolis-Elements 100 bewegt sich dann auf einer Achse, die parallel zur X-Achse ist. Der Schwerpunkt bewegt sich ohne die Einwirkung einer Corioliskraft (d.h. ohne eine Drehbewegung des Substrats um eine Achse die senkrecht auf dem Substrat 1 steht) auf einer Geraden. Wenn es zu einer Drehung des Substrats 1 um die Z-Achse kommt, d.h. um die Achse, die senkrecht auf dem Substrat 1 steht, so wirkt auf das Coriolis-Element 100 eine Coriolis-Kraft, die senkrecht zu der Drehachse und senkrecht zu der Bewegungsachse ist. Diese Krafte wirkt dann in Y-Richtung und bewirkt eine Verschiebung des Corioliselements in der Y-Richtung. Die Verschiebung des Corioliselements 100 wird durch die Federn 142, die in Y-Richtung steif ausgebildet sind, auf das Nachweiselement 140 übertragen und bewirkt eine entsprechende Verschiebung des Nachweiselements 140, die mit den Nachweismitteln 101 nachgewiesen wird.

Die beweglichen Elektroden 104 zusammen mit den feststehenden Elektroden 105 und dem Antriebselement 102 bilden somit ein Anregungsmittel, durch die das Coriolis-Element 100 zu Schwingungen angeregt wird, bei denen die Schwingungsachse des Schwerpunkts 110 parallel zum Substrat ausgerichtet ist.

In der Figur 2 wird eine vergrößerte Detailansicht der Auswertemittel 101 des Nachweiselements 140 der Figur 1 gezeigt. Das rahmenförmige Coriolis-Element 140 umgibt die Auswertemittel 101. Diese sind als gitterförmige Elektroden 121 ausgebildet, wobei eine Vielzahl von gitterförmigen Elektroden 121 innerhalb der rahmenförmigen Struktur des Nachweiselements 140 vorgesehen ist. Zur Stabilisierung sind diese gitterförmigen Elektroden 121 noch mit einem Mittelbalken 150 miteinander verbunden. Jede der Elektroden 121 bewegt sich zusammen mit dem Nachweiselement 140. Die Elektroden 121 sind zwischen feststehenden Elektroden 122, 123 angeordnet, die durch Lager 106 auf dem Substrat 1 befestigt sind. Die Elektroden 122, 123 sind somit als feststehende Elektroden ausgebildet, die sich relativ zum Substrat 1 nicht bewegen.

In der Figur 3 wird ein Querschnitt entlang der Linie III-III der Figur 2 gezeigt. Figur 3 zeigt im Querschnitt das Substrat 1 und eine auf der Oberfläche des Substrats angeordnete Leiterbahn 130. Auf dieser Leiterbahn 130 sind die Verankerungen 106 befestigt und somit fest mit dem Substrat 1 verbunden. Die Lager 106 und auch die daran befestigten Elektroden sind elektrisch leitend und werden durch die Leiterbahn 130 parallel geschaltet. Jede der beweglichen Elektroden 121 ist zwischen einer feststehenden Elektrode 122 und einer feststehenden Elektrode 123 angeordnet. Es werden so zwei Kondensatoren gebildet, zum einen zwischen der beweglichen Elektrode 121 und den Elektroden 122 und zum anderen zwischen der beweglichen Elektrode 121 und der feststehenden Elektroden 123. Diese beiden Kapazitäten sind als Differentialkapazitäten ausgebildet, d.h. bei einer Zunahme der einen Kapazität verringert sich die andere Kapazität entsprechend. Durch die seitliche Versetzung der Lagerblöcke 106 der beiden Elektrodengruppen 122, 123 lassen sich durch entsprechende Leiterbahnen 130 jeweils die entsprechenden Kapazitäten miteinander parallel schalten.

In der Figur 3 ist im Querschnitt sehr gut zu erkennen, dass das Nachweiselement 140 über dem Substrat 1 angeordnet ist und dass auch die mit dem Nachweiselement 140 verbundenen Elektroden 121 über dem Substrat 1 angeordnet sind. Im Querschnitt wird der Schnitt durch die Lagerblöcke 106 der Elektroden 122 gezeigt, die durch die Lagerblöcke 106 auf der Leiterbahn 130 angeordnet sind und so fest mit dem Substrat 1 verbunden sind. Die Elektroden 123 werden im Querschnitt der Figur 3 ebenfalls über dem Substrat gezeigt. Sie sind jedoch an einer anderen Stelle mit dem Substrat 1 über eine entsprechende Leiterbahn 130 für diese Elektroden fest mit dem Substrat 1 verbunden.

Durch Messung der elektrischen Kapazität zwischen den Elektroden des Auswertemittels 101, insbesondere der beweglichen Elekrtode 121 relativ zu den Elektroden 122 und 123, kann so die Auslenkung des Nachweiselements 140 relativ zum Substrat bestimmt werden. Es kann so die auftretende Corioliskraft bzw. die Drehrate mit der das Substrat gedreht wird bestimmt werden.

Für das Substrat 1 und die über dem Substrat angeordneten Elemente wie Coriolis-Element 100 Antriebselement 102, Nachweiselement 140, die Federn und Elektroden wird als Matrial vorzugsweise Silizium verwendet, welches durch entsprechende Dotierungen leitend ausgebildet ist. Das Substrat kann durch isolierende Schichten dort wo es erforderlich ist, elektrisch isoliert werden. Es können aber auch andere Materialien wie Keramik, Glas oder Metalle für die Sensoren verwendet werden.

Der Vorteil dieser Anordnung ist darin zu sehen, dass die gitterförmigen Elektroden 121 nur in Y-Richtung beweglich sind und somit keine Querbewegung relativ zu den feststehenden Elektroden 122, 123 erfolgt. Eine Bewegung in X-Richtung ist für die Messung nicht erwünscht und kann eine mögliche Quelle von Fehlern sein. Der Nachweisrahmen 140 und die Verankerung über die Federn 141 an das Substrat 1 sind so ausgeführt, dass die beweglichen Elektroden 121 nur eine Bewegung in Y-Richtung ausführen.

Bei dem Drehratensensor handelt es sich um ein schwingfähiges System bei dem Schwingungen in X-Richtung und Y-Richtung erfolgen. Dabei sind jedoch nicht in jede Richtung die gleichen Massen und Federn zu berücksichtigen, insbesondere können sich die Eigenschwingungen in den unterschiedlichen Richtungen unterscheiden. Da bei einer Anregung der Schwingungen in den jeweiligen Richtungen die maximalen Auslenkungen auftreten wenn die Frequenz des anregenden Signals die Frequenz der Eigenschwingung annimmt, ist es für ein starkes Messignal von Vorteil, wenn die Anregungsfrequenz, die an den Elektroden 104, 105 angelegt wird, der Eigenschwingung in Y-Richtung entspricht. Die Eigenfrequenzen in den jeweiligen Richtungen ergeben sich aus den Massen und den Federkonstanten. Für die Schwingung in X-Richtung sind die Federkonstanten der Federn 107 und 142 in X-Richtung und die Massen des Antriebselements 102 und des Coriolis-Elements 100 zu berücksichtigen. Für die Eigenschwingung in Y-Richtung sind die Federkonstanten der Federn 103 und 141 in Y-Richtung und die Massen des Coriolis-Elements 100 und des Nachweiselements 140 zu berücksichtigen. Die Federkonstanten und die Massen sollten dabei so ausgelegt werden, dass die Frequenzen der Eigenschwingung in X-Richtung und Y-Richtung im wesentlichen gleich sind. Es kommt dann auch bei kleinen Drehraten zu großen Auslenkungen in Y-Richtung die sich leicht messen lassen.

In der Serienherstellung lassen sich jedoch Prozessschwankungen nicht vermeiden, wodurch sich eine genaue Abstimmung der Frequenzen in beiden Richtungen rein durch mechanische Mittel nicht gewährleisten läßt. Hier kann jedoch das Anlegen einer elektrischen Gleichspannung an den feststehenden Elektroden 122, 123 helfen. Durch das Anlegen von elektrischen Gleichspannungen lassen sich auslenkungsabhängige Kräfte in Y-Richtung erzeugen, die auf die beweglichen Elektroden 121 und somit auf das Nachweiselement 140 wirken. Dadurch resultiert eine Verringerung der Federkonstanten der Federn 141, so dass die Frequenz für die Schwingung in Y-Richtung verringert wird. Die Federkonstanten und die Massen sollten daher so ausgelegt werden, dass die Frequenz der Eigenschwingung in Y-Richtung ein wenig höher ist als die Frequenz der Eigenschwingung in X-Richtung. Durch die Auswahl einer entsprechenden Gleichspannung kann dann die herstellungsbedingte Streuung der Frequenzen in den beiden Richtungen ausgeglichen werden. Die Gleichspannung kann entweder an alle Elektroden zusätzlich zu einem Meßsignal angelegt werden oder es können zusätzliche Elektroden nur für die Gleichspannungen vorgesehen werden.

In der Figur 4 wird ein Ausführungsbeispiel der Erfindung gezeigt. Im Unterschied zur Figur 1 ist zusätzlich zu dem Corioliselement 100, wie es bereits zur Figur 1 beschrieben wurde, noch ein weiteres Corioliselement 200 vorgesehen, welches neben dem Corioliselement 100 über dem Substrat 1 angeordnet ist. Das weitere Corioliselement 200 wird ebenfalls von einem rahmenförmigen Antriebselement 202 umgeben und ist mit Federn 203 mit diesem verbunden. Das weitere Antriebselement 202 ist mit Federn 207 mit Lagerblöcken 206 mit dem Substrat verbunden. Das weitere Corioliselement 200 ist mit Federn 242 mit einem weiteren Nachweiselement 240 verbunden, das durch Federn 241 mit Lagerblöcken 206 mit dem Substrat 1 verbunden ist. Die Funktion der weiteren Elements entsprechen der Funktion der Elemente wie sie zur Figur 1 beschrieben wurden, wobei sich das entsprechend funktionierende weitere Element durch Addition der Zahl 100 zu den Bezugszahlen der Figur 1 ergibt.

In der Figur 4 wird somit eine verdoppelte Ausführung des Sensors nach der Figur 1 gezeigt, wobei jedoch noch zusätzlich eine Koppelfeder 50 vorgesehen ist, mit der die beiden Antriebselemente 102 und 202 miteinander gekoppelt werden. Diese Koppelfeder muß für die Schwingung in X-Richtung berücksichtigt werden, wenn die beiden Antriebselemente 102 und 202 gegenphasige Schwingungen ausüben. Bei der gleichphasigen Schwingung wird die Feder 50 nicht deformiert, so dass bei diesem Schwingungsmode die Feder 50 nicht berücksichtigt wird. Die beiden Schwingungsmoden unterscheiden sich somit in der jeweiligen Frequenz, so dass sie gezielt angeregt werden können. Es soll dabei gezielt eine gegenphasige Schwingung angeregt werden, da dann durch eine Subtraktion der Signale der Anteil an Linearbeschleunigungen, der in Y-Richtung auf die Corioliselemente 100, 200 und die Nachweiselemente 104, 240 wirkt, unterdrückt werden kann. Statt einer Koppelfeder zwischen den Antriebselementen 102, 202 werden erfindungsgemäß Koppelfedern zwischen den Corioliselementen und/oder den Nachweiselementen 140, 240 vorgesehen. Die jeweils umgebenden Rahmen müssen dazu jedoch mit Ausbrüchen versehen werden, durch die die Koppelfedern geführt werden.

## Patentansprüche

1. Drehratensensor mit einem Coriolis-Element (100), das über einer Oberfläche eines Substrats (1) angeordnet ist, wobei Anregungsmittel (104, 105) vorgesehen sind, durch die das Coriolis-Element (100) zu Schwingungen parallel zu einer ersten Achse anregbar ist, wobei Detektionsmittel (101) vorgesehen sind, durch die eine Auslenkung des Coriolis-Elementes (100) aufgrund einer Coriolis-Kraft in einer zweiten Achse, die senkrecht zu der ersten Achse ist, nachweisbar ist, wobei die erste und zweite Achse (X, Y) parallel zur Oberfläche des Substrats (1) sind, wobei über der Oberfläche des Substrats (1) ein Antriebselement (102) und ein Nachweiselement (140) vorgesehen sind, wobei die Anregungsmittel (104, 105) mit dem Antriebselement (102) verbunden sind, wobei das Antriebselement (102) rechteckig, rahmenförmig ausgestaltet ist und das Coriolis-Element (100) umgibt,
wobei das Coriolis-Element (100) rahmenförmig ist und das Nachweiselement (140) umgibt,
wobei das Antriebselement (102) mit einer Feder (103) mit dem Coriolis-Element (100) verbunden ist, die in der ersten Achse steif und in der zweiten Achse weich ausgebildet ist, und wobei das Nachweiselement (140) mit einer Feder (142) mit dem Coriolis-Element (100) verbunden ist, die in der ersten Richtung weich und in der zweiten Richtung steif ausgebildet ist,
**dadurch gekennzeichnet, dass**
ein weiteres Coriolis-Element (200) mit einem weiteren Antriebselement (202) und einem weiteren Nachweiselement (240) vorgesehen ist, und
- dass durch eine Koppelfeder (50) das Coriolis-Element (100) und das weitere Coriolis-Element (200) miteinander gekoppelt werden, wobei die umgebenden Rahmen der Antriebselemente (102, 202) mit Ausbrüchen versehen sind und/oder
- dass durch eine Koppelfeder (50) das Nachweiselement (140) und das weitere Nachweiselement (240) miteinander gekoppelt werden, wobei die umgebenden Rahmen der Coriolis-Elemente (100, 200) und der Antriebselemente (102, 202) mit Ausbrüchen versehen sind.

2. Drehratensensor nach Anspruch 1, **dadurch gekennzeichnet, dass** das Antriebselement mit Federn (107) mit dem Substrat (1) verbunden ist, die in der ersten Achse X weich und in der zweiten Achse Y steif ausgebildet sind und dass das Anregungsmittel (104) mit den Antriebselementen (102) verbunden ist.

3. Drehratensensor nach Anspruch 1, **dadurch gekennzeichnet, dass** das Anregungsmittel als elektrostatischer Kammantrieb (104, 105) ausgebildet ist.

4. Drehratensensor nach einem der Ansprüche 1 bis 3, **dadurch gekennzeichnet, dass** für das Detektionsmittel ein Nachweiselement (140) vorgesehen ist, das mit Federn (142) mit dem Coriolis-Element (100) verbunden ist, wobei die Federn in der ersten Achse X weich und in der zweiten Achse Y steif ausgebildet sind.

5. Drehratensensor nach Anspruch 4, **dadurch gekennzeichnet, dass** das Nachweiselement (140) bewegliche Elektroden (121) aufweist, die feststehenden Elektroden (122, 123) gegenüberliegend angeordnet sind, die mit dem Substrat (1) verbunden sind.

6. Drehratensensor nach Anspruch 4 oder 5, **dadurch gekennzeichnet, dass** die Nachweiselemente (140, 240) mit Federn (140, 141, 241) mit dem Substrat (1) verbunden sind, die in der ersten Richtung X steif und in der zweiten Richtung Y weich ausgebildet sind.

7. Drehratensensor nach einem der vorhergehend Ansprüche, **dadurch gekennzeichnet, dass** eine Masse des Corioliselements (100), des Nachweiselements (140) und des Antriebselements (102) und die Federkonstanten der Federn in der ersten Richtung und in der zweiten Richtung so gewählt werden, dass sich die Frequenzen der Eigenschwingungen des Drehratensensors in den beiden Richtungen im wesentlichen gleichen.

8. Drehratensensor nach Anspruch 7, **dadurch gekennzeichnet, dass** die Frequenz der Eigenschwingung in der zweiten Richtung geringfügig höher gewählt wird, und dass durch Einbringen von zusätzlichen Kräften in der zweiten Richtung die Frequenzen der Eigenschwingungen des Drehratensensors in den beiden Richtungen abgestimmt werden.

## Claims

1. Rate-of-rotation sensor having a Coriolis element (100) which is arranged above a surface of a substrate (1), excitation means (104, 105) which can be used to excite the Coriolis element (100) to oscillate parallel to a first axis being provided, detection means (101) which can be used to detect a deflection of the Coriolis element (100) in a second axis, which is perpendicular to the first axis, on the basis of a Coriolis force being provided, the first and second axes (X, Y) being parallel to the surface of the substrate (1), a drive element (102) and a detection element (140) being provided above the surface of the substrate (1), the excitation means (104, 105) being connected to the drive element (102),
the drive element (102) being rectangular and in the form of a frame and surrounding the Coriolis element (100),
the Coriolis element (100) being in the form of a frame and surrounding the detection element (140), the drive element (102) being connected to the Coriolis element (100) using a spring (103) which is rigid in the first axis and is soft in the second axis, and the detection element (140) being connected to the Coriolis element (100) using a spring (142) which is soft in the first direction and is rigid in the second direction, **characterized in that**
a further Coriolis element (200) having a further drive element (202) and a further detection element (240) is provided, and
- **in that** the Coriolis element (100) and the further Coriolis element (200) are coupled to one another by means of a coupling spring (50), the surrounding frames of the drive elements (102, 202) being provided with cut-outs, and/or
- **in that** the detection element (140) and the further detection element (240) are coupled to one another by means of a coupling spring (50), the surrounding frames of the Coriolis elements (100, 200) and of the drive elements (102, 202) being provided with cut-outs.

2. Rate-of-rotation sensor according to Claim 1, **characterized in that** the drive element is connected to the substrate (1) using springs (107) which are soft in the first axis X and are rigid in the second axis Y, and **in that** the excitation means (104) is connected to the drive elements (102).

3. Rate-of-rotation sensor according to Claim 1, **characterized in that** the excitation means is in the form of an electrostatic comb drive (104, 105).

4. Rate-of-rotation sensor according to one of Claims 1 to 3, **characterized in that** a detection element (140) is provided for the detection means and is connected to the Coriolis element (100) using springs (142), the springs being soft in the first axis X and being rigid in the second axis Y.

5. Rate-of-rotation sensor according to Claim 4, **characterized in that** the detection element (140) has movable electrodes (121) which are arranged opposite stationary electrodes (122, 123) which are connected to the substrate (1).

6. Rate-of-rotation sensor according to Claim 4 or 5, **characterized in that** the detection elements (140, 240) are connected to the substrate (1) using springs (140, 141, 241) which are rigid in the first direction X and are soft in the second direction Y.

7. Rate-of-rotation sensor according to one of the preceding claims, **characterized in that** a mass of the Coriolis element (100), of the detection element (140) and of the drive element (102) and the spring constants of the springs in the first and second directions are selected in such a manner that the frequencies of the natural oscillations of the rate-of-rotation sensor are substantially the same in the two directions.

8. Rate-of-rotation sensor according to Claim 7, **characterized in that** the frequency of the natural oscillation is selected to be slightly higher in the second direction, and **in that** the frequencies of the natural oscillations of the rate-of-rotation sensor are tuned in the two directions by introducing additional forces in the second direction.

## Revendications

1. Capteur de vitesse de rotation avec un élément de Coriolis (100) installé au-dessus de la surface d'un substrat (1), dans lequel sont prévus des moyens d'excitation (104, 105) par lesquels l'élément de Coriolis (100) peut être excité en oscillations, parallèlement à un premier axe, dans lequel sont prévus des moyens de détection (101) permettant de détecter une déviation de l'élément de Coriolis (100) en raison d'une force de Coriolis dans un deuxième axe perpendiculaire au premier axe, dans lequel le premier et le deuxième axe (X, Y) sont parallèles à la surface du substrat (1), dans lequel sont prévus un élément d'entraînement (102) et un élément de détection (140), au-dessus de la surface du substrat (1), dans lequel les moyens d'excitation (104, 105) sont reliés à l'élément d'entraînement (102), dans lequel l'élément d'entraînement (102) est conçu rectangulaire, en forme de cadre, et entoure l'élément de Coriolis (100),
dans lequel l'élément de Coriolis (100) est en forme de cadre et entoure l'élément de détection (140),
dans lequel l'élément d'entraînement (102) est relié à l'élément de Coriolis (100) avec un ressort (103) conçu rigide dans le premier axe et souple dans le deuxième axe, et dans lequel l'élément de détection (140) est relié à l'élément de Coriolis (100) avec un ressort (142) conçu souple dans la première direction et rigide dans la deuxième direction,
**caractérisé en ce que**
il est prévu un autre élément de Coriolis (200), avec un autre élément d'entraînement (202) et un autre élément de détection (240), et
- **en ce que** l'élément de Coriolis (100) et l'autre élément de Coriolis (200) sont accouplés entre eux par un ressort d'accouplement (50), les cadres périphériques des éléments d'entraînement (102, 202) étant pourvus d'encoches, et/ou
- **en ce que** l'élément de détection (140) et l'autre élément de détection (240) sont accouplés entre eux par un ressort d'accouplement (50), les cadres périphériques des éléments de Coriolis (100, 200) et des éléments d'entraînement (102, 202) étant pourvus d'encoches.

2. Capteur de vitesse de rotation selon la revendication 1, **caractérisé en ce que** l'élément d'entraînement est relié au substrat (1) avec des ressorts (107) conçus souples dans le premier axe X et rigides dans le deuxième axe Y, et **en ce que** l'élément d'excitation (104) est relié aux éléments d'entraînement (102).

3. Capteur de vitesse de rotation selon la revendication 1, **caractérisé en ce que** le moyen d'excitation est conçu comme un entraînement à peigne électrostatique (104, 105).

4. Capteur de vitesse de rotation selon l'une des revendications 1 à 3, **caractérisé en ce qu'**en tant que moyen de détection, il est prévu un élément de détection (140) relié à l'élément de Coriolis (100) avec des ressorts (142), dans lequel les ressorts sont conçus souples dans le premier axe X et rigides dans le deuxième axe Y.

5. Capteur de vitesse de rotation selon la revendication 4, **caractérisé en ce que** l'élément de détection (140) comporte des électrodes mobiles (121) faisant face à des électrodes fixes (122, 123) reliées au substrat (1).

6. Capteur de vitesse de rotation selon la revendication 4 ou 5, **caractérisé en ce que** les éléments de détection (140, 240) sont reliés au substrat (1) avec des ressorts (140, 141, 241) conçus rigides dans la première direction X et souples dans la deuxième direction Y.

7. Capteur de vitesse de rotation selon l'une des revendications précédentes, **caractérisé en ce qu'**une masse de l'élément de Coriolis (100), de l'élément de détection (140) et de l'élément d'entraînement (102), et les constantes de rappel des ressorts dans la première direction et la deuxième direction sont choisies de manière à ce que les fréquences des oscillations propres du capteur de vitesse de rotation soient quasiment similaires dans les deux directions.

8. Capteur de vitesse de rotation selon la revendication 7, **caractérisé en ce que** la fréquence d'oscillation propre dans la deuxième direction est choisie légèrement plus élevée, et **en ce que** par l'apport de forces supplémentaires dans la deuxième direction, les fréquences des oscillations propres du capteur de vitesse de rotation sont déterminées dans les deux directions.
